# EUROPEAN PATENT APPLICATION

(11) **EP 4 564 486 A1**
(43) Date of publication of application: **04.06.2025**
(21) Application number: 24855111.1
(22) Date of filing: 29.08.2024
(51) Int. Cl.: H01M 4/62, C08G 65/48, H01M 4/13, H01M 4/139

(54) **ELECTROCHEMICAL DEVICE MIXTURE, ELECTROCHEMICAL DEVICE MIXTURE SHEET, ELECTROCHEMICAL DEVICE, AND METHOD FOR MANUFACTURING ELECTROCHEMICAL DEVICE MIXTURE SHEET**

(30) Priority: 31.08.2023 JP 2023141292
(71) Applicant: DAIKIN INDUSTRIES, LTD., Osaka-shi, Osaka 530-0001 (JP)
(72) Inventor: HIRAGA, Kentaro, Osaka-Shi, Osaka 530-0001 (JP); INOUE, Mayu, Osaka-Shi, Osaka 530-0001 (JP); YAMADA, Takaya, Osaka-Shi, Osaka 530-0001 (JP); KATO, Taketo, Osaka-Shi, Osaka 530-0001 (JP)
(74) Representative: Hoffmann Eitle
(86) International application number: PCT/JP2024/031035
(87) International publication number: WO 2025/047897

(57) **Abstract**

The disclosure aims to provide an electrochemical device mixture capable of improving the sheet strength, an electrochemical device mixture sheet, an electrochemical device, and a method for producing an electrochemical device mixture sheet. Provided is an electrochemical device mixture containing: a fluoropolyether; a fibrillatable resin; and an electrochemical device material.

## Description

### TECHNICAL FIELD

The disclosure relates to electrochemical device mixtures, electrochemical device mixture sheets, electrochemical devices, and methods for producing electrochemical device mixture sheets.

### BACKGROUND ART

Current electric appliances demonstrate a tendency to have a reduced weight and a smaller size, which leads to development of electrochemical devices such as lithium-ion secondary batteries having a high energy density.

As techniques related to electrochemical devices, Patent Literature 1 discloses an electrode for secondary battery including a powdered active material, a conductive material, and a fluorine-containing polymer resin, and Patent Literature 2 discloses a free-standing solid composite electrolyte film produced using solid ion-conductive inorganic particles and a tetrafluoroethylene (co)polymer.

### CITATION LIST

### - Patent Literature

Patent Literature 1: JP 2007-026984 A
Patent Literature 2: JP 2022-546129 T

### SUMMARY OF INVENTION

### - Technical Problem

The disclosure aims to provide an electrochemical device mixture capable of improving the sheet strength, an electrochemical device mixture sheet, an electrochemical device, and a method for producing an electrochemical device mixture sheet.

### - Solution to Problem

The disclosure (1) relates to an electrochemical device mixture containing: a fluoropolyether; a fibrillatable resin; and an electrochemical device material.

The disclosure (2) relates to the electrochemical device mixture according to the disclosure (1), wherein the fluoropolyether includes at least one selected from the compounds represented by the following formulas (1) to (4):

(1) R¹-O-Ra¹-Rb¹-O-Ra¹-R¹;

(2) R²-Rb²-O-Ra²-Rb²-R²;

(3) R³-Rb³-O-Ra³-R³; and

(4) R⁴-Rb⁴-R⁴,

wherein Ra¹ to Ra³ are each independently a polyoxyalkylene group containing 4 to 50 fluorine-free oxyalkylene units;
the oxyalkylene units in Ra¹ to Ra³ are each independently -CH₂CH₂O- or -CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
R⁴s are each independently a fluorine atom, a hydrogen atom, a hydroxy group, an aldehyde group, a carboxylic acid group, a C1-C10 alkyl ester group, an amide group optionally containing a substituent, or an amino group optionally containing a substituent:

   (5) -Rf¹-Rf-O-Rf²-

   wherein Rf¹ and Rf² are each independently a C1-C16 alkylene group optionally substituted with a fluorine atom, and
   Rf is a divalent fluoropolyether group.

The disclosure (3) relates to the electrochemical device mixture according to the disclosure (2), wherein the Ra¹ to Ra³ are each independently a polyoxyalkylene group represented by the following formula (Ra-I):

(Ra-I): -(CH₂CH₂O)ᵣ(CH₂CH(CH₃)O)ₛ(CH₂CH(CH₂CH₃)O)ₜ(CH₂CH(Ph)O)ᵤ-

wherein r, s, t, and u are each independently an integer of 0 or 1 or greater, and r + s + t + u is 4 to 50.

The disclosure (4) relates to the electrochemical device mixture according to the disclosure (2) or (3),
wherein the Ra¹ to Ra³ each have a number average molecular weight of 40 to 4000.

The disclosure (5) relates to the electrochemical device mixture according to any one of the disclosures (2) to (4), wherein each Rf is independently a fluoropolyether group represented by the following formula (Rf-I):

Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-

wherein Rcs are each independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms chlorine atoms.

The disclosure (6) relates to the electrochemical device mixture according to any one of the disclosures (2) to (5), wherein each Rf is independently a group represented by the following formula (Rf-I-I) or the following formula (Rf-I-II):

Formula (Rf-I-I): -(OC₃F₆)_{d}-(OC₂F₄)ₑ-

wherein d is an integer of 1 to 200 and e is 0 or 1,

Formula (Rf-I-II): -(OC₄F₈)_{c}-(OC₃F₆)_{d}-(OC₂F₄)ₑ-(OCF₂)_{f}-

wherein c and d are each independently an integer of 0 to 30;
e and f are each independently an integer of 1 to 200;
a sum of c, d, e, and f is 2 or greater; and
repeating units with c, d, e, and f are present in an arbitrary order.

The disclosure (7) relates to the electrochemical device mixture according to any one of the disclosures (2) to (6), wherein the R¹ to R³ are each independently a methyl group, an ethyl group, a trifluoromethyl group, or a pentafluoroethyl group.

The disclosure (8) relates to the electrochemical device mixture according to any one of the disclosures (1) to (7), wherein the fibrillatable resin includes polytetrafluoroethylene.

The disclosure (9) relates to the electrochemical device mixture according to any one of the disclosures (1) to (8), wherein the electrochemical device material includes an electrode active material.

The disclosure (10) relates to the electrochemical device mixture according to any one of the disclosures (1) to (9), wherein the fluoropolyether is liquid at a temperature within a range of 25°C to 80°C.

The disclosure (11) relates to the electrochemical device mixture according to any one of the disclosures (1) to (10), wherein an amount of a polyalkylene oxide represented by the following formula (6) is less than 20% by mass:

(6) R^{1B}-(OCHR^{1A}(CH₂)ⱼCHR^{2A})ₙ-OR^{2B}

wherein R^{1A} and R^{2A} are each independently a hydrogen atom or a C1-C5 alkyl group;
j is an integer of 0 or 1 or 2,
R^{1B} and R^{2B} are each independently a hydrogen atom or a C1-C3 alkyl group; and
n is an integer of 5 to 1000.

The disclosure (12) relates to the electrochemical device mixture according to any one of the disclosures (1) to (11), containing a conductive aid.

The disclosure (13) relates to an electrochemical device mixture sheet including the electrochemical device mixture according to any one of the disclosures (1) to (12).

The disclosure (14) relates to an electrochemical device including the electrochemical device mixture sheet according to the disclosure (13).

The disclosure (15) relates to a method for producing an electrochemical device mixture sheet, the method including:
a step (1) of mixing a fluoropolyether, a fibrillatable resin, and an electrochemical device material to prepare an electrochemical device mixture; and a step (2) of rolling the electrochemical device mixture obtained in the step (1) into a sheet.

The disclosure (16) relates to the production method according to the disclosure (15), wherein the fibrillatable resin includes polytetrafluoroethylene.

### - Advantageous Effects of Invention

The disclosure can provide an electrochemical device mixture capable of improving the sheet strength, an electrochemical device mixture sheet, an electrochemical device, and a method for producing an electrochemical device mixture sheet.

### DESCRIPTION OF EMBODIMENTS

The disclosure will be specifically described hereinbelow.

### <Electrochemical device mixture>

The disclosure relates to an electrochemical device mixture containing: a fluoropolyether; a fibrillatable resin; and an electrochemical device material.

The electrochemical device mixture of the disclosure, with the above configuration, can improve the strength of an electrode sheet or a solid electrolyte sheet. Kneading a fluoropolyether and a fibrillatable resin improves the cohesiveness of powder particles, facilitating the production of fibrils. This presumably provides the above effect.

The facilitated production of fibrils enables a reduction in the amount of binder used and enhances the energy density of the electrochemical device.

At least one selected from the compounds represented by the following formulas (1) to (4) can be suitably used as the fluoropolyether. Use of any of these compounds can enhance the effect of improving the sheet strength and also makes the initial discharge capacity and the amount of gas generated favorable. The compounds with Rb¹ to Rb⁴ moieties exhibit good lubricity, improving the packing density. This presumably provides the above effect. The compounds of the formulas (1) to (3) can impart ion conductivity owing to the presence of Ra¹ to Ra³ moieties.

(1) R¹-O-Ra¹-Rb¹-O-Ra¹-R¹

(2) R²-Rb²-O-Ra²-Rb²-R²

(3) R³-Rb³-O-Ra³-R³

(4) R⁴-Rb⁴-R⁴

In the formulas, Ra¹ to Ra³ are each independently a polyoxyalkylene group containing 4 to 50 fluorine-free oxyalkylene units;
the oxyalkylene units in Ra¹ to Ra³ are each independently -CH₂CH₂O- or -CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
R⁴s are each independently a fluorine atom, a hydrogen atom, a hydroxy group, an aldehyde group, a carboxylic acid group, a C1-C10 alkyl ester group, an amide group optionally containing a substituent, or an amino group optionally containing a substituent.

   (5) -Rf¹-Rf-O-Rf²-

In the formula, Rf¹ and Rf² are each independently a C1-C16 alkylene group optionally substituted with a fluorine atom, and
Rf is a divalent fluoropolyether group.

When the oxyalkylene units in Ra¹ to Ra³ are each - CH₂CH(J)O-, J as an alkyl group may be linear or branched, and is preferably linear. The alkyl group for J preferably has a carbon number of 1 to 3.

Examples of aryl groups for J include a phenyl group, a 4-nitrophenyl group, a 4-acetylaminophenyl group, and a 4-methanesulfonylphenyl group.

Preferably, Ra¹ to Ra³ are each independently a polyoxyalkylene group represented by the following formula (Ra-I):

(Ra-I): -(CH₂CH₂O)ᵣ-(CH₂CH(CH₃)O)ₛ-(CH₂CH(CH₂CH₃)O)ₜ- (CH₂CH(Ph)O)ᵤ-

wherein r, s, t, and u are each independently an integer of 0 or 1 or greater, and r + s + t + u is 4 to 50.

In the formula (Ra-I), r is preferably 1 or greater, more preferably 2 or greater, while preferably 30 or smaller, more preferably 20 or smaller.

s, t, and u are each preferably 10 or smaller, more preferably 5 or smaller, still more preferably 0.

r + s + t + u is preferably 1 or greater, more preferably 2 or greater, while preferably 20 or smaller, more preferably 10 or smaller.

Ra¹ to Ra³ each have a number average molecular weight of preferably 40 or greater, more preferably 100 or greater, while preferably 4000 or smaller, more preferably 1000 or smaller.

The number average molecular weights of Ra¹ to Ra³ herein are measured by ¹H-NMR.

In Rb¹ to Rb⁴, the alkylene groups for Rf¹ and Rf² in the formula (5) may be linear or branched, and are preferably linear.

The alkylene groups for Rf¹ and Rf² are each preferably a fluorine-substituted alkylene group substituted with a fluorine atom.

The alkylene groups for Rf¹ and Rf² each preferably has a carbon number of 1 to 3.

In Rb¹ to Rb⁴, Rf in the formula (5) may have a cyclic structure.

In Rb¹ to Rb⁴, Rf in the formula (5) is preferably a fluoropolyether group represented by the following formula (Rf-I):

Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-

wherein Rcs are each independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

Rc is preferably a hydrogen atom or a fluorine atom, more preferably a fluorine atom. In other words, Rf in the formula (5) is preferably a perfluoropolyether group.

a, b, c, d, e, and f are preferably each independently an integer of 0 to 100.

The sum of a, b, c, d, e, and f is preferably 5 or greater, more preferably 10 or greater, and may be 15 or greater or 20 or greater. The sum of a, b, c, d, e, and f is preferably 100 or smaller, more preferably 60 or smaller, and may be 50 or smaller or 30 or smaller.

The repeating units with a, b, c, d, e, and f each may be linear or branched.

-(OC₆F₁₂)- may be, for example, any of OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, and -(OCF₂CF₂CF₂CF₂CF(CF₃))-.

-(OC₅F₁₀)- may be, for example, any of - (OCF₂CF₂CF₂CF₂CF₂)-, -(OCF(CF₃)CF₂CF₂CF₂)-,-(OCF₂CF(CF₃)CF₂CF₂)-, -(OCF₂CF₂CF(CF₃)CF₂)-, and - (OCF₂CF₂CF₂CF(CF₃)).

-(OC₄F₈)- may be, for example, any of - (OCF₂CF₂CF₂CF₂)-, -(OCF(CF₃)CF₂CF₂)-, -(OCF₂CF(CF₃)CF₂)-, - (OCF₂CF₂CF(CF₃)) -, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅)).

-(OC₃F₆)- (specifically, the case where all Rcs in the formula (Rf-I) are fluorine atoms) may be, for example, any of -(OCF₂CF₂CF₂)-, -(OCF(CF₃)CF₂)-, and -(OCF₂CF(CF₃))-.

-(OC₂F₄)- may be, for example, either -(OCF₂CF₂)- or - (OCF(CF₃))-.

Rf may be a group represented by any of the following formulas (Rf-I-I) to (Rf-I-V):

Formula (Rf-I-I): -(OC₃F₆)_{d}-(OC₂F₄)ₑ-

wherein d is an integer of 1 to 200 and e is 0 or 1;

Formula (Rf-I-II): -(OC₄F₈)_{c}-(OC₃F₆)_{d}-(OC₂F₄)ₑ-(OCF₂)_{f}-

wherein c and d are each independently an integer of 0 to 30,
e and f are each independently an integer of 1 to 200,
a sum of c, d, e, and f is 2 or greater, and
repeating units with c, d, e, and f are present in an arbitrary order;

   Formula (Rf-I-III): -(R²⁰-R²¹)_{g}-

   wherein R²⁰ is OCF₂ or OC₂F₄,
   R²¹ is a group selected from OC₂F₄, OC₃F₆, OC₄F_{B}, OC₅F₁₀, and OC₆F₁₂ or a combination of two or three groups selected from the aforementioned groups, and
   g is an integer of 2 to 100;

      Formula (Rf-I-IV): -(OC₆F₁₂)ₐ-(OC₅F₁₀)e-(OC₄F₈)_{c}-(OC₃F₆)_{d}-(OC₂F₄)ₑ-(OCF₂)_{f}-

      wherein e is an integer of 1 to 200,
      a, b, c, d, and f are each independently an integer of 0 to 200, and
      repeating units with a, b, c, d, e, and f are present in an arbitrary order;

         Formula (Rf-I-V): -(OC₆F₁₂)ₐ-(OC₅F₁₀)e-(OC₄F₈)_{c}-(OC₃F₆)_{d}-(OC₂F₄)ₑ-(OCF₂)_{f}-

         wherein f is an integer of 1 to 200,
         a, b, c, d, and e are each independently an integer of 0 to 200, and
         repeating units with a, b, c, d, e, and f are present in an arbitrary order.

In the formula (Rf-I-I), d is preferably 5 to 200, more preferably 10 to 100, still more preferably 15 to 50, and may be 25 to 35.

The group represented by the formula (Rf-I-I) is preferably a group represented by -(OCF₂CF₂CF₂)_{d}- or - (OCF(CF₃)CF₂)_{d}-.

In the formula (Rf-I-II), e and f are each independently an integer of preferably 5 to 200, more preferably 10 to 200. The sum of c, d, e, and f is preferably 5 or greater, more preferably 10 or greater, and may be 15 or greater or 20 or greater.

The group represented by the formula (Rf-I-II) is preferably a group represented by -(OCF₂CF₂CF₂CF₂)_{c}-(OCF₂CF₂CF₂)_{d}-(OCF₂CF₂)ₑ-(OCF₂)_{f}- or a group represented by - (OC₂F₄)ₑ-(OCF₂)_{f}-, more preferably a group represented by - (OC₂F₄)ₑ-(OCF₂)_{f}-.

In the formula (Rf-I-III), R²⁰ is preferably OC₂F₄, R²¹ is preferably a group selected from OC₂F₄, OC₃F₆ and OC₄F₈ or a combination of two or three groups independently selected from the aforementioned groups, more preferably a group selected from OC₃F₆ and OC₄F₈. Non-limiting examples of the combination of two or three groups independently selected from OC₂F₄, OC₃F₆, and OC₄F₈ include -OC₂F₄OC₃F₆-, - OC₂F₄OC₄F_{B}-, -OC₃F₆OC₂F₄-, -OC₃F₆OC₃F₆-, -OC₃F₆OC₄F_{B}-, - OC4F8OC₄F_{B}-, -OC₄F₈OC₃F₆-, -OC₄F₈OC₂F₄-, -OC₂F₄OC2F4OC₃F₆-, - OC₂F₄OC₂F₄OC₄F₈-, -OC₂F₄OC₃F₆OC₂F4-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC3F6OC₂F₄-, and -OC₄F_{B}OC₂F₄OC₂F₄-.

In the formula (Rf-I-III), g is an integer of preferably 3 or greater, more preferably 5 or greater. g is preferably an integer of 50 or smaller.

In the formula (Rf-I-III), OC₂F₄, OC₃F₆, OC₄F_{B}, OC₅F₁₀, and OC₆F₁₂ may be either linear or branched, and are preferably linear. In this embodiment, the formula (Rf-I-III) preferably represents (OC₂F_{c}OC₃F₆)_{g}- or -(OC₂F₄-OC₄F₈)_{g}-.

In the formula (Rf-I-IV), e is an integer of preferably 1 to 100, more preferably 5 to 100. The sum of a, b, c, d, e, and f is preferably 5 or greater, more preferably 10 or greater, and is, for example, 10 to 100.

In the formula (Rf-I-V), f is an integer of preferably 1 to 100, more preferably 5 to 100. The sum of a, b, c, d, e, and f is preferably 5 or greater, more preferably 10 or greater, and is, for example, 10 to 100.

The ratio of e to f (hereafter, referred to as "e/f ratio") in Rf may be 0.5 to 4, and is preferably 0.6 to 3, more preferably 0.7 to 2, still more preferably 0.8 to 1.4. Setting the e/f ratio to 4 or smaller further improves the lubricity and chemical stability. The smaller the e/f ratio, the higher the lubricity. Setting the e/f ratio to 0.5 or greater can further enhance the stability of the compound. The greater the e/f ratio, the better the stability of the fluoropolyether structure. In this case, the value of the e/f ratio is preferably 0.8 or greater.

Rf may be a group represented by the following

formula (Rf-I-VI): -(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}-

wherein a, b, c, d, e, and f are each independently an integer of 0 to 200,
the sum of a, b, c, d, e, and f is 1 or greater, and
repeating units with a, b, c, d, e, and f are present in an arbitrary order.

Rf may be a group represented by the following

formula (Rf-I-VII): -(OCF₂CF₂)_{d}-(OCF(CF₃))ₑ-(OCF₂)_{f}-

wherein d, e, and f are each independently an integer of 0 to 200,
the sum of d, e, and f is 1 or greater,
repeating units with d, e, and f are present in an arbitrary order.

In the case where Rf is this group, the salt solubility is expected to be better because an increase in the number of ether bonds facilitates coordination of salt cations.

The ratio of d to f (hereafter, referred to as "d/f ratio") in Rf may be 0.5 to 4, and is preferably 0.6 to 3, more preferably 0.7 to 2, still more preferably 0.8 to 1.4. Setting the d/f ratio to 4 or smaller further improves the lubricity and chemical stability. The smaller the d/f ratio, the higher the lubricity. Setting the d/f ratio to 0.5 or greater can further enhance the stability of the compound. The greater the d/f ratio, the better the stability of the fluoropolyether structure. In this case, the value of the d/f ratio is preferably 0.8 or greater.

Each Rf is independently preferably a group represented by the formula (Rf-I-I) or the formula (Rf-I-II), more preferably a group represented by the formula (Rf-I-II).

Rf may have a number average molecular weight of, but not limited to, for example, 500 to 30000, preferably 1500 to 30000, more preferably 2000 to 10000.

The number average molecular weight of Rf herein is measured by ¹⁹F-NMR.

The alkyl or fluoroalkyl group for R¹ to R³ may be linear or branched, and is preferably linear.

Examples of aryl groups for R¹ to R³ include a phenyl group, a 4-nitrophenyl group, a 4-acetylaminophenyl group, and a 4-methanesulfonylphenyl group.

R¹ to R³ are each independently preferably a C1-C3 alkyl group or a C1-C3 fluoroalkyl group, more preferably a methyl group, an ethyl group, a trifluoromethyl group, or a pentafluoroethyl group, still more preferably a methyl group, a trilfluoromethyl group, or a pentafluoroethyl group.

The alkyl ester group for R⁴ may be linear or branched.

Examples of the substituent contained in the amide or amino group for R⁴ include an alkyl group, an alkoxy group, and a hydroxy group.

R⁴s are each independently preferably a fluorine atom, a hydrogen atom, a hydroxy group, an aldehyde group, a carboxylic acid group, a C1-C10 alkyl ester group, an amide group optionally containing a substituent, or an amino group optionally containing a substituent, more preferably a fluorine atom.

When R⁴ is a fluorine atom, R⁴-Rb⁴ and Rb⁴-R⁴, i.e., R⁴-Rf¹ and Rf²-R⁴, may be each independently a group selected from the group consisting of -CF₃, -CF₂CF₃, and - CF₂CF₂CF₃.

In order to achieve good sheet strength, the fluoropolyether is preferably represented by the formula (1).

In order to achieve good sheet strength, the fluoropolyether is preferably liquid at a temperature within a range of 25°C to 80°C.

Examples of the form "liquid at a temperature within a range of 25°C to 80°C" include a form "solid at 25°C and liquid at 50°C" and a form "solid at 50°C and liquid at 80°C". The form "liquid at a low temperature and solid at a high temperature" is not included in the form "liquid at a temperature within a range of 25°C to 80°C" because such a form does not normally exist.

The amount of the fluoropolyether in the electrochemical device mixture of the disclosure is preferably 0.1% by mass or more, more preferably 0.5% by mass or more, still more preferably 1.0% by mass or more, while preferably 30% by mass or less, more preferably 20% by mass or less, still more preferably 15% by mass or less.

The fibrillatable resin is a resin that is easily fibrillated under a shear stress. Examples of the fibrillatable resin include liquid crystal polymers (LCP), cellulose, acrylic resins, ultra high molecular weight polyethylene, and polytetrafluoroethylene (PTFE). Each of these may be used alone or two or more of these may be used in combination. PTFE is preferred among these in terms of chemical stability, thermal stability, and processibility.

The PTFE may be either a homopolymer of tetrafluoroethylene (TFE) or a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

In order to achieve improvement in binding force, sheet strength, and flexibility, the PTFE is preferably the modified PTFE.

In order to achieve improvement in binding force, sheet strength, and flexibility, the modified PTFE preferably contains a modifying monomer unit in an amount falling within a range of 0.00001 to 1.0% by mass in all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.80% by mass, more preferably 0.50% by mass, still more preferably 0.40% by mass, further preferably 0.30% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include a perfluoroolefin such as hexafluoropropylene (HFP); a hydrogen-containing fluoroolefin such as trifluoroethylene and vinylidene fluoride (VDF); a perhaloolefin such as chlorotrifluoroethylene (CTFE); a perfluorovinyl ether; a perfluoroallyl ether; a (perfluoroalkyl)ethylene; and ethylene. One modifying monomer may be used alone or two or more modifying monomers may be used in combination.

Examples of the perfluorovinyl ether include, but are not limited to, unsaturated perfluoro compounds represented by the following formula (A):

CF₂=CF-ORff (A)

wherein Rff is a perfluoro organic group. The term "perfluoro organic group" herein means an organic group in which all hydrogen atoms bonded to any carbon atom are replaced by fluorine atoms. The perfluoro organic group may have an ether oxygen.

Examples of the perfluorovinyl ether include a perfluoro(alkyl vinyl ether) (PAVE) represented by the formula (A) in which Rff is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rff is a C4-C9 perfluoro(alkoxy alkyl) group; those represented by the formula (A) wherein Rff is a group represented by the following formula: 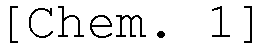 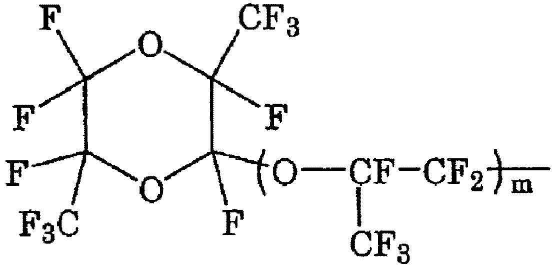 wherein m is an integer of 0 or 1 to 4; and those represented by the formula (A) wherein Rff is a group represented by the following formula: 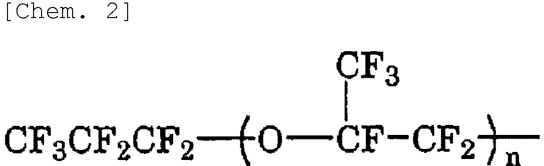 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORff¹ (B)

wherein Rff¹ is a perfluoro organic group.

Rff¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

In order to achieve improvement in expandability, binding force, and flexibility of the mixture sheet, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE.

The PTFE may have a core-shell structure. An example of the PTFE having a core-shell structure is a modified PTFE including a core of high-molecular-weight PTFE and a shell of lower-molecular-weight PTFE or modified PTFE in a particle. Examples of this modified PTFE include PTFEs disclosed in JP 2005-527652 T.

Examples of commercially available PTFEs include F-104, F-106, F-107, F-104C, F-121, F-201, F-205, F-208, and F-302 available from Daikin Industries, Ltd.; 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, and 641J available from The Chemours Company; TF2029, TF2025Z, TF2053Z, TF2073Z, TF2001Z, TF2071USZ, and TF2072Z available from 3M; CD145, CD123, CD126E, CD097, CD084E, CD086EL, CD086EH, CD090E, CD122E, CD141E, and CD127E available from AGC Inc.; and DF681F, DF680F, DF330F, DF291F, DF230F, DF210F, DF132F, DF130F, and DF120F available from Solvay.

For formation of a mixture sheet with better strength, the PTFE preferably has an endothermic peak temperature of 320°C or higher, more preferably 325°C or higher, still more preferably 330°C or higher, further preferably 335°C or higher, further preferably 340°C or higher, further preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on PTFE that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

The amount of the fibrillatable resin in the electrochemical device mixture of the disclosure is preferably 0.1% by mass or more, more preferably 0.2% by mass or more, still more preferably 0.5% by mass or more, while preferably 10% by mass or less, more preferably 5% by mass or less, still more preferably 3% by mass or less.

An electrode active material, for example, can be used as the electrochemical device material. In other words, the electrochemical device mixture of the disclosure may be an electrode mixture containing an electrode active material.

The electrode active material may be a positive electrode active material or a negative electrode active material.

The positive electrode active material may be any material that can electrochemically occlude and release alkali metal ions, and is preferably, for example, a substance containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides, which produce high voltage. Examples of the alkali metal ions include lithium ions, sodium ions, and potassium ions. Preferred are lithium ions.

Examples of the alkali metal-containing transition metal composite oxides include lithium-manganese spinel composite oxides represented by the formula:

MₐMn_{2-b}M¹_{b}O₄

(wherein M includes at least one metal selected from the group consisting of Li, Na, and K; 0.9 ≤ a; 0 ≤ b ≤ 1.5;
and M¹ includes at least one metal selected from the group consisting of Fe, Co, Ni, Cu, Zn, Al, Sn, Cr, V, Ti, Mg, Ca, Sr, B, Ga, In, Si, and Ge);
lithium-nickel composite oxides represented by the formula:

MNi_{1-c}M²_{c}O₂

(wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge); and
lithium-cobalt composite oxides represented by the formula:

MCo_{1-d}M³_{d}O₂

(wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge). In the above formula, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi_{0.8}Mn_{0.1}Co_{0.1}O₂, MNi_{0.8}Co_{0.15}Al_{0.05}O₂, and MNi_{1/3}Co_{1/3}Mn_{1/3}O₂, and preferred is a compound represented by the following formula. Particularly preferred among these is LiNi_{0.8}Mn_{0.1}Co_{0.1}O₂.

MNiₕCoᵢMn₃M⁵ₖO₂

In the formula, M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula:

MₑM⁴_{f}(PO₄)_{g}

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li.

The transition metal of the alkali metal-containing transition metal phosphate compound is preferably V, Ti, Cr, Mn, Fe, Co, Ni, Cu, or the like. Specific examples thereof include iron phosphates such as LiFePO₄ Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure. Particularly preferred is LiFeSo₄.

Examples of a different positive electrode active material include a lithium-nickel composite oxide. The lithium-nickel composite oxide is preferably a positive electrode active material represented by the following formula:

Li_{y}Ni₁₋ₓMₓO₂

wherein 0.01 ≤ x ≤ 0.7, 0.9 ≤ y ≤ 2.0, and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be impaired even when the battery is driven at high voltage.

Other examples of the positive electrode active material also include solid solution materials of M₂MnO₃ and MM⁶O₂ (wherein M is at least one metal selected from the group consisting of Li, Na, and K; and M⁶ is a transition metal such as Co, Ni, Mn, or Fe).

The solid solution material is, for example, an alkali metal manganese oxide represented by the formula Mₓ[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from that of the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

One positive electrode active material may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or one obtained by replacing one or more Mn atoms in LiMn₂O₄ with a different transition metal, and a combination of LiFePO₄ with either LiCoO₂ or one obtained by replacing one or more Co atoms in LiCoO₂ with a different transition metal.

In order to achieve a high battery capacity, the amount of the positive electrode active material is preferably 50 to 90% by mass of the positive electrode mixture. The amount of the positive electrode active material in the positive electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the positive electrode active material in the positive electrode active material layer may lead to an insufficient electric capacity. In contrast, too large an amount thereof may lead to insufficient ion conductivity, insufficient electron conductivity, and insufficient strength of the electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material at least partially containing a carbonaceous material and/or a silicon-containing compound can be particularly suitably used.

A negative electrode active material used in the disclosure suitably contains silicon as a constitutional element. With a negative electrode active material containing silicon as a constitutional element, a high-capacity battery can be produced.

As a material containing silicon, silicon particles, particles having a structure where silicon fine particles are dispersed in a silicon-based compound, silicon oxide particles represented by the formula: SiOₓ (0.5 ≤ x ≤ 1.6), or a mixture of these is/are preferred. The use of any of these can provide a negative electrode mixture for lithium-ion secondary batteries with higher initial charge-discharge efficiency, high capacity, and excellent cycle characteristics.

The term "silicon oxide" herein is a generic term for amorphous silicon oxides. Silicon oxides prior to disproportionation are represented by the formula: SiOₓ (0.5 ≤ x ≤ 1.6) where x preferably satisfies 0.8 ≤ x < 1.6, more preferably 0.8 ≤ x < 1.3. Such a silicon oxide can be obtained, for example, by heating a mixture of silicon dioxide and metallic silicon to generate silicon monoxide gas, followed by cooling and deposition of the silicon monoxide gas.

In order to achieve a high battery capacity, the amount of the negative electrode active material is preferably 50 to 90% by mass of the negative electrode mixture. The amount of the negative electrode active material in the negative electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the negative electrode active material in the negative electrode active material layer may lead to an insufficient electric capacity. In contrast, too large an amount thereof may lead to insufficient ion conductivity, insufficient electron conductivity, and insufficient strength of the electrode.

The electrochemical device material may be a solid electrolyte. In other words, the electrochemical device mixture of the disclosure may be a solid electrolyte mixture containing a solid electrolyte.

The solid electrolyte may be a sulfide-based solid electrolyte or an oxide-based solid electrolyte. In particular, when a sulfide-based solid electrolyte is used, the electrochemical device mixture is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (X = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The amount of the solid electrolyte in the electrochemical device mixture of the disclosure is preferably 20% by mass or more, more preferably 30% by mass or more, still more preferably 40% by mass or more, while preferably 99% by mass or less, more preferably 90% by mass or less, still more preferably 85% by mass or less.

The electrochemical device mixture of the disclosure may be an electrode mixture for a solid-state battery containing an electrode active material and a solid electrolyte.

The amount of the electrochemical device material in the electrochemical device mixture of the disclosure is preferably 70% by mass or more, more preferably 80% by mass or more, still more preferably 90% by mass or more, while preferably 99.5% by mass or less, more preferably 98.5% by mass or less, still more preferably 97.5% by mass or less.

The amount of a polyalkylene oxide represented by the following formula (6) in the electrochemical device mixture of the disclosure is preferably less than 20% by mass. This ensures good ion conductivity. When the amount is 20% by mass or more, the composition tends to exhibit higher viscosity to have a decrease in ion conductivity, and at the same time have a decrease in electrochemical stability.

(6) R^{1B}-(OCHR^{1A}(CH₂)ⱼCHR^{2A})ₙ-OR^{2B}

In the formula, R^{1A} and R^{2A} are each independently a hydrogen atom or a C1-C5 alkyl group;
j is an integer of 0 or 1 or 2,
R^{1B} and R^{2B} are each independently a hydrogen atom or a C1-C3 alkyl group; and
n is an integer of 5 to 1000.

The amount of the polyalkylene oxide represented by the formula (6) in the electrochemical device mixture of the disclosure is more preferably 10% by mass or less, still more preferably 5% by mass or less, particularly preferably 1% by mass or less. The lower limit may be, but is not limited to, 0% by mass.

The electrochemical device mixture of the disclosure may contain a lithium salt. The electrochemical device mixture containing a lithium salt has good lithium-ion conductivity.

Any lithium salt may be used. Specific examples thereof include the following: inorganic lithium salts such as LiPF₆, LiBF₄, LiClO₄, LiAlF₄, LiSbF₆, LiTaF₆, LiWF₇, LiAsF₆, LiAlCl₄, LiI, LiBr, LiCl, LiB₁₀Cl₁₀, Li₂SiF₆, Li₂PFO₃, and LiPO₂F₂;
lithium tungstate salts such as LiWOF₅;
lithium carboxylate salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts containing an S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methylsulfate, lithium ethylsulfate (C₂H₅OSO₃Li), and lithium 2,2,2-trifluoroethylsulfate;
lithium imide salts such as lithium bis(trifluoromethanesulfone)imide (LiTFSI), lithium bis(monofluorosulfone)imide (LiFSI) LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium bis-perfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, LiN(CF₃SO₂)(FSO₂), LiN(CF₃SO₂)(C₃F₇SO₂), LiN(CF₃SO₂)(C₄F₉SO₂), and LiN(POF₂)₂;
lithium methide salts such as LiC(FSO₂)₃, LiC(CF₃SO₂)₃, and LiC(C₂F₅SO₂)₃; and
fluorine-containing organic lithium salts such as salts represented by the formula: LiPFₐ(CₙF₂ₙ₊₁)₆₋ₐ (wherein a is an integer of 0 to 5; and n is an integer of 1 to 6) such as LiPF₃(C₂F₅)₃, LiPF₃(CF₃)₃, LiPF₃(iso-C₃F₇)₃, LiPF₅(iso-C₃F₇), LiPF₄(CF₃)₂, and LiPF₄(C₂F₅)₂, as well as LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, and LiSCN, LiB(CN)₄, LiB(C₆H₅)₄, Li₂(C₂O₄), LiP(C₂O₄)₃, and Li₂B₁₂F_{b}H_{12-b} (wherein b is an integer of 0 to 3).

Preferred among these are LiTFSI, LiFSI, LiPF₆, LiBF₄, LiSbF₆, LiTaF₆, LiPO₂F₂, FSO₃Li, CF₃SO₃Li, LiN(FSO₂)₂, LiN(FSO₂) (CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃. Particularly preferred are LiTFSI, LiFSI, and LiPF₆.

One of these lithium salts may be used alone or two or more thereof may be used in any combination. In combination use of two or more thereof, preferred examples thereof include a combination of LiPF₆ and LiBF₄ and a combination of LiPF₆ and LiPO₂F₂, C₂H₅OSO₃Li, or FSO₃Li, each of which have an effect of improving the high-temperature storage characteristics, the load characteristics, and the cycle characteristics.

In another example, an inorganic lithium salt and an organic lithium salt are used in combination. Such a combination has an effect of reducing deterioration due to high-temperature storage. The organic lithium salt is preferably CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, or the like.

The amount of the lithium salt in the electrochemical device mixture of the disclosure is preferably 0.1% by mass or more, more preferably 1% by mass or more, while preferably 30% by mass or less, more preferably 20% by mass or less.

The electrochemical device mixture of the disclosure may contain a conductive aid.

Non-limiting examples of the conductive aid include metal materials such as copper, nickel, and gold and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used alone or two or more thereof may be used in any combination at any ratio.

The amount of the conductive aid in the electrochemical device mixture of the disclosure is preferably 0.01% by mass or more, more preferably 0.1% by mass or more, still more preferably 1% by mass or more, while preferably 30% by mass or less, more preferably 15% by mass or less, still more preferably 5% by mass or less.

The fibrillatable resin serves as a binder in the electrochemical device mixture of the disclosure. Still, the electrochemical device mixture of the disclosure may contain a different binder.

Non-limiting examples of the different binder include resin polymers such as polyethylene, polypropylene, polyethylene terephthalate, polymethyl methacrylate, aromatic polyamides, chitosan, alginic acid, polyacrylic acid, polyimide, cellulose, and nitro cellulose; rubbery polymers such as styrene-butadiene rubber (SBR), isoprene rubber, butadiene rubber, fluoroelastomers, acrylonitrile-butadiene rubber (NBR), and ethylene-propylene rubber; styrene-butadiene-styrene block copolymers and hydrogenated products thereof; thermoplastic elastomeric polymers such as ethylene-propylene-diene terpolymers (EPDM), styrene-ethylene-butadiene-styrene copolymers, and styreneisoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, vinylidene fluoride copolymers, and tetrafluoroethylene-ethylene copolymers; and polymer compositions having ion conductivity of alkali metal ions (especially, lithium ions). One of these may be used alone or two or more thereof may be used in any combination at any ratio.

The amount of the different binder in the electrochemical device mixture of the disclosure is normally 0.01 to 3% by mass.

### <Electrochemical device mixture sheet>

The electrochemical device mixture of the disclosure is preferably in the form of a sheet.

The disclosure also relates to an electrochemical device mixture sheet containing the electrochemical device mixture of the disclosure.

The electrochemical device mixture sheet of the disclosure preferably has a thickness of 300 µm or smaller, more preferably 250 µm or smaller, still more preferably 200 µm or smaller, further more preferably 180 µm or smaller, particularly preferably 150 µm or smaller, while preferably 10 µm or greater, more preferably 15 µm or greater, still more preferably 20 µm or greater.

The electrochemical device mixture sheet of the disclosure can be used as a solid electrolyte mixture sheet or an electrode mixture sheet.

### <Production method of electrochemical device mixture sheet>

The electrochemical device mixture sheet of the disclosure can be obtained, for example, by a production method including: a step (1) of mixing a fluoropolyether, a fibrillatable resin, and an electrochemical device material to prepare an electrochemical device mixture; and a step (2) of rolling the electrochemical device mixture obtained in the step (1) into a sheet.

The disclosure also relates to the production method.

The fluoropolyether, the fibrillatable resin, and the electrochemical device material used in the step (1) are the same as those described for the electrochemical device mixture of the disclosure.

For the mixing condition in the step (1), the number of rotations is suitably set to 3000 rpm or less. The number of rotations is preferably 10 rpm or more, more preferably 15 rpm or more, still more preferably 20 rpm or more, while preferably 2000 rpm or less, more preferably 1500 rpm or less, still more preferably 1000 rpm or less. At the number of rotations below this range, mixing may take a long time, affecting the productivity. At the number of rotations above this range, fibrillation may occur excessively, resulting in a mixture sheet having poor strength and poor flexibility.

In the step (1), the mixed materials may be molded into a bulky shape. Specific examples of methods of molding into a bulky shape include extrusion molding and press molding. The term "bulky" does not specify the shape and means any state of single mass, including a rod shape, a sheet shape, a spherical shape, a cubic shape, and the like.

A specific example of the rolling method in the step (2) is a method of rolling the bulky mixture using, for example, a roller press, a flat plate press, or a calender roller.

The step (2) may be followed by a step (3) of applying a larger load to the resulting rolled sheet to form a thinner sheet-shaped product. The step (3) may be repeated. As described, better flexibility is achieved not by thinning the rolled sheet in one time but by rolling the sheet in steps. The number of performing the step (3) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

The step (2) or the step (3) is also preferably followed by a step (4) of coarsely crushing the rolled sheet, again forming the coarsely crushed product into a bulky product, and then rolling the bulky product into a sheet-shaped product. Repeating the step (4) is also preferred. The number of performing the step (4) is preferably once or more and 12 times or less, more preferably twice or more and 11 times or less.

Specific examples of coarsely crushing the rolled sheet and again forming the coarsely crushed product into a bulky product in the step (4) include a method of folding the sheet, a method of forming the sheet into a rod- or a thin sheet-shaped product, and a method of forming the sheet into chips. The term "coarsely crushing" herein means changing the form of the rolled sheet obtained in the step (2) or step (3) into a different form so as to roll the product into a sheet-shaped product in the subsequent step, and encompasses simply folding the rolled sheet.

The step (4) may be followed by the step (3), or may be repeated. In any of the steps (2), (3), and (4), uniaxial stretching or biaxial stretching may be performed.

In the step (2), (3), and (4), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. At the number of rotations above this range, fibrillation may occur excessively, resulting in a mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

### <Electrochemical device>

The disclosure also relates to an electrochemical device produced using the electrochemical device mixture sheet of the disclosure.

The electrochemical device of the disclosure may include the electrochemical device mixture sheet of the disclosure as an electrode mixture sheet or as a solid electrolyte mixture sheet. Alternatively, the electrochemical device of the disclosure may include the electrochemical device mixture sheets of the disclosure as an electrode mixture sheet and a solid electrolyte mixture sheet.

The electrochemical device of the disclosure preferably includes components such as a positive electrode and a negative electrode. Specifically, the electrochemical device of the disclosure is preferably a secondary battery including these components, particularly preferably a lithium-ion secondary battery including these components.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 µm or greater, preferably 3 µm or greater, more preferably 5 µm or greater, while usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density higher than the above range may cause low permeability of the electrolyte solution toward the vicinity of the interface between the current collector and the active material, and poor charge and discharge characteristics particularly at a high current density, failing to provide high output. The positive electrode mixture sheet having a density lower than the above range may cause poor conductivity between the active materials and increase the battery resistance, failing to provide high output.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 µm or greater, preferably 3 µm or greater, more preferably 5 µm or greater, while usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The secondary battery may be a secondary battery including an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The nonaqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

The aforementioned lithium salt can be used as the electrolyte salt.

The concentration of the electrolyte salt is preferably 0.8 mol/L or higher, more preferably 1.0 mol/L or higher. The upper limit is usually 1.5 mol/L or lower, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric formed from a material stable to the electrolyte solution, such as resin, glass fiber, or inorganic matter, and having an excellent liquid-retaining ability.

Examples of the material of a resin or glass-fiber separator include polyolefins such as polyethylene and polypropylene, aromatic polyamides, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 µm or greater, preferably 5 µm or greater, more preferably 8 µm or greater, while usually 50 µm or smaller, preferably 40 µm or smaller, more preferably 30 µm or smaller. The separator thinner than the above range may have poor insulation and poor mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 µm and a thickness of 5 to 50 µm. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 µm may be applied to the respective surfaces of the positive electrode with the fibrillatable resin used as a binder to form a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. In order to reduce weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin which is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based all-solid-state secondary battery.

The solid-state secondary battery preferably includes a positive electrode, a negative electrode, and a solid electrolyte layer between the positive electrode and the negative electrode.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is described with reference to examples, but the disclosure is not intended to be limited by these examples.

The following compounds were used. Compounds 1-1 to 1-7 were liquid at 25°C.
<Compound 1-1>

   CH₃O(CH₂CH₂O)ₓ₁CH₂CF₂(OCF₂CF₂)_{y}(OCF₂)_{z}OCF₂CH₂O(CH₂CH₂O)ₓ₂CH 3

   (x1: 4, y: 12.3 on average, z: 10.2 on average, x2: 4, the number average molecular weight of (CH₂CH₂O)ₓ₁: 176, the number average molecular weight of (CH₂CH₂O)ₓ₂: 176)
<Compound 1-2>
   Compound having the same structure as Compound 1-1 (x1: 8.4 on average, y: 12.3 on average, z: 10.2 on average, x2: 8.4 on average, the number average molecular weight of (CH₂CH₂O)ₓ₁: 400, the number average molecular weight of (CH₂CH₂O)ₓ₂: 400)
<Compound 1-3>

   CF₂(CF₃)CF₂(OCF(CF₃)CF₂)ₓOCF(CF₃)CH_{2O}(CH₂CH₂O)_{y}CH₃

   (x: 9.4 on average, y: 4, the number average molecular weight of (CH₂CH_{2O})_{y}: 176)
<Compound 1-4>
   Compound having the same structure as Compound 1-3 (x: 14.3 on average, y: 4, the number average molecular weight of (CH₂CH₂O)_{y}: 176)
<Compound 1-5>
   Fluorolink E10H (available from Solvay)
   HO(CH₂CH₂O)ₓ₁CH₂CF₂O(CF₂CF₂O)ₓ₂(CF₂O)_{y}CF₂CH₂O(CH₂CH₂O)ₓ₃H (x1: 1.27 on average, y: 8.16 on average, x2: 7.09 on average, x3: 1.27 on average)
<Compound 1-6>

   CF₃CF₂(OCF₂CF₂)ₓ₁(OCF₂)_{y1}OCF₂CH₂O(CH₂CH₂O)_{z}CH₂CF₂(OCF₂CF₂)_{x 2}(OCF₂)_{y2}OCF₂CF₃

   (x1: 15.5 on average, y1: 13.0 on average, z: 4.1 on average, x2: 15.5 on average, y2: 13.0 on average, the number average molecular weight of (CH₂CH₂O)_{z}: 200)
<Compound 1-7>
   Compound having a chemical structure represented by the following formula (I) (m: 29.5 on average, n: 24.6 on average, the terminal R has a number average molecular weight of 5120 with CF₃ and CF₂CF₃ present in an average ratio of 1:0.17) 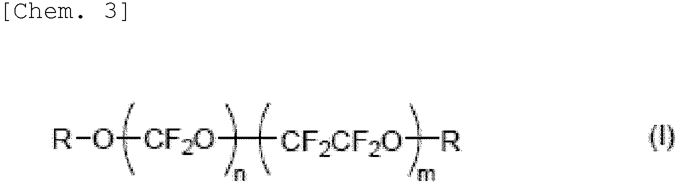
<Compound 2-1>
   Ethyl methyl carbonate (EMC, available from Kishida Chemical Co., Ltd.)
<Compound 2-2>
   Polyethylene glycol 200 (available from Tokyo Chemical Industry Co., Ltd.)

### (Synthesis Example 1) Synthesis of Compound 1-1

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 10 g of dialcohol-terminated fluoropolyether (available from Solvay, Fomblin D2, 5.1 mmol), followed by stirring with heating at 70°C for three hours. The temperature inside the vessel was set to 65°C, and 5.5 g of triethylene glycol-2-bromoethyl methyl ether (available from Tokyo Chemical Industry Co., Ltd., 20.4 mmol) was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-1 was obtained.

### (Synthesis Example 2) Synthesis of tosylate of polyethylene glycol monomethyl ether

A reaction vessel purged with nitrogen was charged with 8.0 g of polyethylene glycol monomethyl ether 400 (available from Tokyo Chemical Industry Co., Ltd., average molecular weight: 380 to 420, 20.0 mmol), 25 mL of tetrahydrofuran (available from Tokyo Chemical Industry Co., Ltd.), and 4.7 g of p-toluenesulfonyl chloride (available from Tokyo Chemical Industry Co., Ltd.), followed by stirring until uniform. The reaction vessel in an ice water bath was charged with a solution of 3.4 g of potassium hydroxide (available from Fujifilm Wako Pure Chemical Corporation, 60 mmol) in 10 mL of pure water, followed by stirring for 10 minutes. The reaction vessel was taken out of the ice water bath, and the contents were stirred for 12 hours at room temperature. The reaction solution was poured into a solution mixture of 30 mL of icy water and 60 mL of methylene chloride. The aqueous layer was extracted three times with methylene chloride. To the separated organic layer was added 8 g of magnesium sulfate, so that the organic layer was dried. Magnesium sulfate was removed from the treated solution by filtration. Volatile components were distilled off from the treated solution, whereby a tosylate of polyethylene glycol monomethyl ether was obtained.

### (Synthesis Example 3) Synthesis of Compound 1-2

Compound 1-2 was obtained by reacting the tosylate of polyethylene glycol monomethyl ether synthesized in Synthesis Example 2 in place of triethylene glycol-2-bromoethyl methyl ether under the reaction conditions of Synthesis Example 1.

### (Synthesis Example 4) Synthesis of Compound 1-3

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 10.2 g of monoalcohol-terminated fluoropolyether (available from Uni-chem Co., Ltd., modified product of perfluoropolyether, molecular weight: 2000, 5.1 mmol), followed by stirring with heating at 70°C for three hours. The temperature inside the vessel was set to 65°C, and 2.8 g of triethylene glycol-2-bromoethyl methyl ether (available from Tokyo Chemical Industry Co., Ltd., 10.0 mmol) was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-3 was obtained.

### (Synthesis Example 5) Synthesis of Compound 1-4

Compound 1-4 was obtained as in Synthesis Example 4, except that monoalcohol-terminated fluoropolyether was replaced with a modified product of perfluoropolyether (available from Uni-chem Co., Ltd., molecular weight:
3000).

### (Synthesis Example 6) Synthesis of Compound 1-6

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 20.4 g of monoalcohol-terminated fluoropolyether (available from Solvay, Fluorolink ZMF-402, 5.1 mmol), followed by stirring with heating at 70°C for three hours. The temperature inside the vessel was set to 65°C, and a solution of 1.3 g (2.5 mmol) of ditosylate-terminated polyethylene glycol obtained in Synthesis Example 9 in 5 g of 1,3-bis(trifluoromethyl)benzene was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-6 was obtained.

PTFE-1 to PTFE-3 were produced by the following methods, and evaluated.

### <Average primary particle size>

A PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

A PTFE aqueous dispersion in an amount of 1 g is dried in an air dryer at 150°C for 60 minutes, and the ratio of the mass of the heating residue to the mass (1 g) of the aqueous dispersion, expressed as a percentage, is used as the polymer solid concentration.

### <Amount of modifying monomer>

PTFE powder was press-molded into a thin-film disc and the thin-film disc was subjected to FT-IR measurement, so that infrared absorbances were obtained. The amount of CTFE was determined by multiplying the ratio (absorbance at 957 cm⁻¹/ (absorbance at 2360 cm⁻¹) by 0.58.

The PTFE composition was press-molded into a thin-film disc and the thin-film disc was subjected to FT-IR measurement, so that infrared absorbances were obtained. The HFP content was determined by multiplying the ratio (absorbance at 982 cm⁻¹) / (absorbance at 935 cm⁻¹) by 0.3.

### <Standard specific gravity (SSG)>

The SSG was determined by the immersion method in conformity with ASTM D792 using a sample molded in conformity with ASTM D4895-89.

A white solid A was obtained by the method disclosed in Synthesis Example 1 of WO 2021/045228.

### (Production Example 1)

A 6-L stainless-steel autoclave equipped with a stirring blade and a temperature-controlling jacket was charged with 3480 g of deionized water, 100 g of paraffin wax, and 5.3 g of the white solid A. The inside of the autoclave was purged with nitrogen gas with warming to 70°C to remove oxygen. TFE was injected to set the pressure inside the autoclave to 0.78 MPaG and the temperature inside the autoclave was maintained at 70°C under stirring. Next, an aqueous solution prepared by dissolving 15.0 mg of ammonium persulfate in 20 g of water was injected with TFE, whereby a polymerization reaction was started. The pressure inside the autoclave dropped as the polymerization reaction progressed. TFE was thus added so that the temperature inside the autoclave was maintained at 70°C and the pressure inside the autoclave was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached about 1200 g from the start of the polymerization, stirring and feeding of TFE were stopped. Immediately thereafter, the gas inside the autoclave was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 310 nm, and the solid content concentration was 25.3% by mass.

The PTFE aqueous dispersion obtained was diluted to a solid content concentration of 13% by mass. The PTFE was coagulated with stirring in the container, and water was filtered out, whereby a PTFE wet powder was obtained.

The resulting PTFE wet powder was dried at 180°C for 18 hours, whereby PTFE-1 was obtained.

The SSG of PTFE-1 obtained was 2.156.

### (Production Example 2)

A 6-L stainless-steel autoclave equipped with a stirring blade and a temperature-controlling jacket was charged with 3580 g of deionized water, 100 g of paraffin wax, and 5.4 g of the white solid A. The inside of the autoclave was purged with nitrogen gas with warming to 80°C to remove oxygen. After addition of 1.20 g of CTFE, TFE was further injected to set the pressure inside the autoclave to 0.78 MPaG and the temperature inside the autoclave was maintained at 80°C under stirring. Next, an aqueous solution prepared by dissolving 360 mg of disuccinic peroxide in 20 g of water and an aqueous solution prepared by dissolving 10 mg of ammonium persulfate in 20 g of water were injected with TFE, whereby a polymerization reaction was started. The pressure inside the autoclave dropped as the polymerization reaction progressed. TFE was thus added so that the temperature inside the autoclave was maintained at 80°C and the pressure inside the autoclave was maintained at 0.78 MPaG. When 1530 g of TFE had been consumed from the start of the polymerization (conversion rate: 90%), 4.2 g of CTFE was injected with TFE. The polymerization was further continued. When the amount of TFE polymerized reached about 1700 g from the start of the polymerization, stirring and feeding of TFE were stopped. Immediately thereafter, the gas inside the autoclave was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 241 nm, and the solid content concentration was 32.0% by mass.

The PTFE aqueous dispersion obtained was diluted to a solid content concentration of 13% by mass. The dilution was stirred vigorously in a container equipped with a stirrer to be coagulated, and water was filtered out, whereby a PTFE wet powder was obtained.

The resulting PTFE wet powder was dried at 145°C for 18 hours, whereby PTFE-2 was obtained.

The CTFE content of PTFE-2 obtained was 0.23% by mass and the SSG was 2.170.

### (Preparation Example 1)

To 16 g of deionized water was added 0.273 g of lauric acid, to which 2.77 g of a 2.8% concentration ammonia aqueous solution was gradually added with stirring, whereby aqueous solution C was obtained.

To 100 g of deionized water was added 10 g of lauric acid, to which 25 g of a 10% concentration ammonia aqueous solution was gradually added with stirring, whereby aqueous solution D was obtained. The pH at this time was 9.6.

### (Production Example 3)

A 3-L stainless-steel autoclave equipped with a stirring blade and a temperature-controlling jacket was charged with 1748 g of deionized water, 90 g of paraffin wax, the aqueous solution C obtained in Preparation Example 1, and 0.5 g of ammonium oxalate. The pH of the aqueous dispersion at this time was 9.0. The autoclave was hermetically sealed, and the inside of the autoclave was purged with nitrogen so that oxygen was removed. The temperature inside the autoclave was maintained at 70°C with stirring, and 2.0 g of HFP was added thereto. Further, the pressure inside the autoclave was increased with TFE to 2.70 MPa. When continuous feeding of a potassium permanganate aqueous solution at a concentration of 0.5% by mass, as a polymerization initiator, to the autoclave was started, the pressure dropped and the reaction started. TFE was fed so that the pressure inside the autoclave was constant at 2.70 MPaG. Stirring was stopped when 80 g of TFE had been added, and depressurization was performed until the pressure inside the autoclave reached the atmospheric pressure.

Immediately thereafter, the autoclave was filled with TFE to set the pressure inside the autoclave to 2.70 MPaG, and stirring was restarted, whereby the reaction was continued. At the same time, continuous feeding of the aqueous solution D obtained in Preparation Example 1 to the autoclave was started. Stirring was stopped when 680 g of TFE had been added, and depressurization was performed until the pressure inside the autoclave reached the atmospheric pressure. By the end of the reaction, 56.0 g of the potassium permanganate aqueous solution and 26.2 g of the aqueous solution D were fed. The resulting aqueous dispersion was taken out and cooled, and the paraffin wax was separated, whereby a PTFE aqueous dispersion was obtained. The resulting PTFE aqueous dispersion had a pH of 8.8, a solid content concentration of 27.1% by mass, and a primary particle size of 220 nm.

The PTFE aqueous dispersion obtained was diluted with deionized water to a solid content concentration of 13% by mass. The dilution was stirred vigorously in a container equipped with a stirrer to be coagulated, and water was filtered out, whereby a wet powder was obtained.

The resulting wet powder was dried at 240°C for 18 hours, whereby PTFE-3 was obtained.

PTFE-3 obtained had an HFP content of 0.02% by mass and a standard specific gravity of 2.170.

By the following procedures, mixture sheets of examples and comparative examples were produced, and evaluations of mixture sheets and batteries were performed.

### (Production of positive electrode mixture sheet)

The active material and the conductive aid were weighed out, and they were fed into a V-type mixer, followed by mixing at 37 rpm for 10 minutes, whereby a mixture containing the active material and the conductive aid was obtained.

Next, the mixture and a compound (any of Compounds 1-1 to 1-7, 2-1, and 2-2) were fed into a high-speed fluidized bed mixer and processed at 200 rpm for one minute to disperse the mixture.

Then, the binder (fibrillatable resin: PTFE powder) weighed out was added to the mixture and the mixture was allowed to cool sufficiently in a thermostatic bath at 5°C. The mixture containing the active material, the conductive aid, the binder, and the compound was fed into a high-speed fluidized bed mixer and processed at 1500 rpm for three minutes to homogenize the mixture.

Then, the mixture was thoroughly heated in a thermostatic bath at 80°C, and processed in a high-speed fluidized bed mixer at 2500 rpm for eight minutes so that fibrillation was promoted, whereby an electrode mixture was obtained.

The electrode mixture was fed to a rolling machine including parallel metal rolls capable of rotating at different peripheral speeds (temperature: 60°C, rotation speed of the left roll: 1 m/min, rotation speed of the right roll: 0.8 m/min), whereby an electrode mixture sheet was obtained.

The resulting mixture sheet was again fed to the rolling machine and rolled, whereby an electrode mixture sheet with higher strength was obtained.

The electrode mixture sheet was then fed to a roll press machine to adjust the gap. The thickness of the positive electrode mixture layer was finally adjusted to 80 µm.

Table 1 shows the material types and composition ratios (mass ratios).

The obtained electrode mixture sheets were all self-supporting films.

### (Measurement of strength of positive electrode mixture sheet)

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 40 mm. A displacement was applied to the test piece until breaking, and the maximum stress of the measured results was taken as the strength of each sample. The results were compared with the value in Comparative Example A-1 in Table 2, the value in Comparative Example B-1 in Table 3, and the value in Comparative Example C-1 in Table 4 each taken as 100.

The test pieces were ranked from A to E in descending order of tensile strength and electrode strength.
A: 150 or more
B: 130 to 149
C: 110 to 129
D: 95 to 109
E: Less than 95

### (Production of positive electrode)

The positive electrode mixture sheet was bonded to 20-µm aluminum foil in the following manner.

The adhesive used was a slurry prepared by dissolving polyvinylidene fluoride (PVDF) in N-methylpyrrolidone (NMP) and dispersing carbon black therein at a ratio of 80:20. The above adhesive was applied to aluminum foil and dried on an electric griddle at 120°C for 15 minutes, whereby a current collector with an adhesive layer was formed.

After that, the positive electrode mixture sheet was placed on the current collector with an adhesive layer, and the positive electrode mixture sheet and the current collector were bonded to each other using a roll press machine heated to 100°C. The workpiece was cut into the desired size, followed by tab attachment, whereby a positive electrode was obtained.

### (Production of negative electrode)

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-µm-thick copper foil and dried. The workpiece was rolled using a press and cut to provide a piece in a desired size, followed by tab attachment. This piece was used as a negative electrode.

### (Preparation of electrolyte solution)

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A LiPF₆ salt was mixed with this mixed solution at 23°C so that the concentration thereof in the electrolyte solution was 1.1 mol/L.

### (Production of aluminum laminate cell)

The positive electrode and the negative electrode were placed to face each other with a 20-um-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

### <Battery evaluation>

The lithium-ion secondary battery produced above was subjected to constant current/constant voltage charge (hereinafter, referred to as CC/CV charge) (0.1 C cut off) to 4.25 V at a current corresponding to 0.33 C at 45°C, and then discharged to 3 V at a constant current of 0.33 C. This was counted as one cycle, and the discharge capacity at the third cycle was used to determine the initial discharge capacity.

The determined initial discharge capacities (initial capacities) were ranked by relative evaluation. The results were compared with the value in Comparative Example A-1 in Table 2, the value in Comparative Example B-1 in Table 3, and the value in Comparative Example C-1 in Table 4 each taken as 100.
∘∘ (Excellent): 110 or more
o (Good): 105 to 109
Δ (Fair): 95 to 104
× (Poor): Less than 95

Then, the battery whose initial discharge capacity had been evaluated was again subjected to CC/CV charge (0.1 C cut off) at 45°C to 4.3 V, and the volume of the battery was determined by the Archimedes' method. After determining the volume of the battery, the battery was stored at a high temperature at 60°C for 30 days. After storage at high temperature, the battery was sufficiently cooled, and the volume thereof was determined at 25°C. Based on the difference in volume of the battery before and after the storage test, the amount of gas generated was determined.

The determined amounts of gas generated were ranked by relative evaluation. The results were compared with the value in Comparative Example A-1 in Table 2, the value in Comparative Example B-1 in Table 3, and the value in Comparative Example C-1 in Table 4 each taken as 100.
∘∘ (Excellent): Less than 80
∘ (Good): 80 to 89
Δ (Fair): 90 to 109
× (Poor): 110 or more

**[Table 1]**

| | Active material (A) | Conductive aid (B) | Binder (C) | Composition ratio [A: B:C] | Compound (D) | Composition ratio [( A + B + C):D] |
|---|---|---|---|---|---|---|
| Example A-1 | LiNi_{0.8}Mn_{.1}Co_{0.1}O₂ | SuperP Li | PTFE-1 | 96.5:2:1.5 | 1-1 | 100:3 |
| Example A-2 | LiNi_{0.8}Mn_{0.1}Co_{0.1}O₂ | SuperP Li | PTFE-1 | 96.5:2:1.5 | 1-5 | 100:3 |
| Comparative Example A-1 | LiNi_{0.8}Mn_{0.1}Co_{0.1}O₂ | SuperP Li | PTFE-1 | 96.5:2:1.5 | - | 100:0 |
| Comparative Example A-2 | LiNi_{0.8}Mn_{0.1}Co_{0.1}O₂ | SuperP Li | PTFE-1 | 96.5:2:1.5 | 2-1 | 100:3 |
| Comparative Example A-3 | LiNi_{0.8}Mn_{0.1}Co_{0.1}O₂ | SuperP Li | PTFE-1 | 96.5:2:1.5 | 2-2 | 100:3 |
| Example B-1 | LiNi_{0.8}Mn_{0.1}Co_{0.1}O₂ | SuperP Li | PTFE-2 | 96.5:2:1.5 | 1-1 | 100:7 |
| Example B-2 | LiNi_{0.8}Mn_{0.1}Co_{0.1}O₂ | SuperP Li | PTFE-2 | 96.5:2:1.5 | 1-3 | 100:7 |
| Example B-3 | LiNi_{0.8}Mn_{0.1}Co_{0.1}O₂ | SuperP Li | PTFE-2 | 96.5:2:1.5 | 1-4 | 100:7 |
| Example B-4 | LiNi_{0.8}Mn_{0.1}Co_{0.1}O₂ | SuperP Li | PTFE-2 | 96.5:2:1.5 | 1-2 | 100:1 |
| Example B-5 | LiNi_{0.8}Mn_{0.1}Co_{0.1}O₂ | SuperP Li | PTFE-2 | 96.5:2:1.5 | 1-2 | 100:15 |
| Example B-6 | LiNi_{0.8}Mn_{0.1}Co_{0.1}O₂ | SuperP Li | PTFE-2 | 96.5:2:1.5 | 1-6 | 100:7 |
| Example B-7 | LiNi_{0.8}Mn_{0.1}Co_{0.1}O₂ | SuperP Li | PTFE-2 | 96.5:2:1.5 | 1-7 | 100:7 |
| Example B-8 | LiFePO₄ | SuperP Li | PTFE-2 | 96.5:2:1.5 | 1-1 | 100:7 |
| Comparative Example B-1 | LiNi_{0.8}Mn_{0.1}Co_{0.1}O₂ | SuperP Li | PTFE-2 | 96.5:2:1.5 | - | 100:0 |
| Example C-1 | LiNi_{0.8}Mn_{0.1}Co_{0.1}O₂ | SuperP Li | PTFE-3 | 96.5:2:1.5 | 1-1 | 100:3 |
| Example C-2 | LiNi_{0.8}Mn_{0.1}Co_{0.1}O₂ | SuperP Li | PTFE-3 | 96.5:2:1.5 | 1-1 | 100:10 |
| Comparative Example C-1 | LiNi_{0.8}Mn_{0.1}Co_{0.1}O₂ | SuperP Li | PTFE-3 | 96.5:2:1.5 | - | 100:0 |

**[Table 2]**

| | Sheet strength | Battery performance | |
|---|---|---|---|
| | | Gas generation | Initial capacity |
| Example A-1 | C | Δ | Δ |
| Example A-2 | C | × | × |
| Comparative Example A-1 | - | - | - |
| Com parative Example A-2 | D | × | × |
| Com parative Example A-3 | D | × | × |

**[Table 3]**

| | Sheet strength | Battery performance | |
|---|---|---|---|
| | | Gas generation | Initial capacity |
| Example B-1 | C | ○ | Δ |
| Example B-2 | C | ○ | Δ |
| Example B-3 | C | ○ | Δ |
| Example B-4 | C | Δ | Δ |
| Example B-5 | A | Δ | Δ |
| Example B-6 | C | ○ | Δ |
| Example B-7 | C | ○ | Δ |
| Example B-8 | C | ○ | Δ |
| Comparative Example B-1 | - | - | - |

**[Table 4]**

| | Sheet strength | Battery performance | |
|---|---|---|---|
| | | Gas generation | Initial capacity |
| Example C-1 | C | Δ | Δ |
| Example C-2 | B | Δ | Δ |
| Comparative Example C-1 | - | - | - |

## Claims

1. An electrochemical device mixture comprising:
a fluoropolyether;
a fibrillatable resin; and
an electrochemical device material.

2. The electrochemical device mixture according to claim 1,
wherein the fluoropolyether includes at least one selected from the compounds represented by the following formulas (1) to (4):
(1) R¹-O-Ra¹-Rb¹-O-Ra¹-R¹;
(2) R²-Rb²-O-Ra²-Rb²-R²;
(3) R³-Rb³-O-Ra³-R³; and
(4) R⁴-Rb⁴-R⁴,
wherein Ra¹ to Ra³ are each independently a polyoxyalkylene group containing 4 to 50 fluorine-free oxyalkylene units;
the oxyalkylene units in Ra¹ to Ra³ are each independently -CH₂CH₂O- or -CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
R⁴s are each independently a fluorine atom, a hydrogen atom, a hydroxy group, an aldehyde group, a carboxylic acid group, a C1-C10 alkyl ester group, an amide group optionally containing a substituent, or an amino group optionally containing a substituent:
(5) -Rf¹-Rf-O-Rf²-
wherein Rf¹ and Rf² are each independently a C1-C16 alkylene group optionally substituted with a fluorine atom, and
Rf is a divalent fluoropolyether group.

3. The electrochemical device mixture according to claim 2,
wherein the Ra¹ to Ra³ are each independently a polyoxyalkylene group represented by the following formula (Ra-I) :
(Ra-I): - (CH₂CH₂O)ᵣ(CH₂CH(CH₃)O)ₛ(CH₂CH(CH₂CH₃)O)ₜ(CH₂CH(Ph)O)ᵤ-
wherein r, s, t, and u are each independently an integer of 0 or 1 or greater, and r + s + t + u is 4 to 50.

4. The electrochemical device mixture according to claim 2 or 3,
wherein the Ra¹ to Ra³ each have a number average molecular weight of 40 to 4000.

5. The electrochemical device mixture according to any one of claims 2 to 4,
wherein each Rf is independently a fluoropolyether group represented by the following formula (Rf-I):
Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-
wherein Rcs are each independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

6. The electrochemical device mixture according to any one of claims 2 to 5,
wherein each Rf is independently a group represented by the following formula (Rf-I-I) or the following formula (Rf-I-II):
Formula (Rf-I-I): - (OC₃F₆)_{d}-(OC₂F₄)ₑ-
wherein d is an integer of 1 to 200 and e is 0 or 1,
Formula (Rf-I-II): - (OC₄F₈)_{c}-(OC₃F₆)_{d}-(OC₂F₄)ₑ-(OCF₂)_{f}-
wherein c and d are each independently an integer of 0 to 30;
e and f are each independently an integer of 1 to 200;
a sum of c, d, e, and f is 2 or greater; and
repeating units with c, d, e, and f are present in an arbitrary order.

7. The electrochemical device mixture according to any one of claims 2 to 6,
wherein the R¹ to R³ are each independently a methyl group, an ethyl group, a trifluoromethyl group, or a pentafluoroethyl group.

8. The electrochemical device mixture according to any one of claims 1 to 7,
wherein the fibrillatable resin includes polytetrafluoroethylene.

9. The electrochemical device mixture according to any one of claims 1 to 8,
wherein the electrochemical device material includes an electrode active material.

10. The electrochemical device mixture according to any one of claims 1 to 9,
wherein the fluoropolyether is liquid at a temperature within a range of 25°C to 80°C.

11. The electrochemical device mixture according to any one of claims 1 to 10,
wherein an amount of a polyalkylene oxide represented by the following formula (6) is less than 20% by mass:
(6) R^{1B}-(OCHR^{1A}(CH₂)ⱼCHR^{2A})ₙ-OR^{2B}
wherein R^{1A} and R^{2A} are each independently a hydrogen atom or a C1-C5 alkyl group;
j is an integer of 0 or 1 or 2,
R^{1B} and R^{2B} are each independently a hydrogen atom or a C1-C3 alkyl group; and
n is an integer of 5 to 1000.

12. The electrochemical device mixture according to any one of claims 1 to 11, comprising a conductive aid.

13. An electrochemical device mixture sheet comprising the electrochemical device mixture according to any one of claims 1 to 12.

14. An electrochemical device comprising the electrochemical device mixture sheet according to claim 13.

15. A method for producing an electrochemical device mixture sheet, the method comprising:
a step (1) of mixing a fluoropolyether, a fibrillatable resin, and an electrochemical device material to prepare an electrochemical device mixture; and
a step (2) of rolling the electrochemical device mixture obtained in the step (1) into a sheet.

16. The production method according to claim 15,
wherein the fibrillatable resin includes polytetrafluoroethylene.
